# EUROPEAN PATENT APPLICATION

(11) **EP 4 664 368 A1**
(43) Date of publication of application: **17.12.2025**
(21) Application number: 23927646.2
(22) Date of filing: 27.12.2023
(51) Int. Cl.: G06N 20/00, G06F 18/214

(54) **TRAINING DATA GENERATION PROGRAM, METHOD, AND DEVICE**

(30) Priority: 14.03.2023 JP 2023040098
(71) Applicant: FUJITSU LIMITED, Kawasaki-shi, Kanagawa 211-8588 (JP)
(72) Inventor: KOBAYASHI, Kenji, Kawasaki-shi, Kanagawa 211-8588 (JP)
(74) Representative: Hoffmann Eitle
(86) International application number: PCT/JP2023/046860
(87) International publication number: WO 2024/190044

(57) **Abstract**

[Problem] To suppress excessive fairness enhancement or biased fairness enhancement in a case of application of a combination of data correction processes for correcting imbalances in training data.

[Means of Solving] A training data generation device receives a designation of plural data correction processes to be applied in sequence to first training data; based on a combination of the plural data correction processes, determines a fairness enhancement strength, which is a degree of correction of data to be performed by each of the plural data correction processes; and based on the fairness enhancement strength, applies plural data correction processes to the first training data in sequence and generates corrected second training data.

## Description

### FIELD

The technique of the disclosure relates to a training data generation program, a training data generation method, and a training data generation device.

### BACKGROUND

In training data used to train machine learning models, there are cases in which there are a disproportionate number of data or specific labels for certain social groups, such as a particular gender or race. When a machine learning model is trained using this kind of training data, the machine learning model is susceptible to making unfair predictions with respect to said group, in terms of having low prediction accuracy or a low rate of positive examples, for example. Therefore, for groups that are susceptible to unfavorable prediction i.e., minority groups efforts are being made to alleviate imbalances in training data and to improve accuracy and fairness.

For example, a data processing device has been proposed that divides a data aggregate into plural groups, obtains the number of data items belonging to each of the plural groups, and controls the number of data items belonging to each of the plural groups based on the obtained number. Further, this device trains a learner device using a data aggregate the number of which is controlled by this control.

Further, a method for allocating orders has been proposed, for example. This method obtains a predictive model, and uses the predictive model to determine the probability of occurrence of a targeted event based on targeted order characteristics, targeted requester characteristics, and targeted provider characteristics. Further, this method balances the sample configuration based on the training data, using sample balancing methods such as undersampling and oversampling.

Further, a sampling device has been proposed that, for example, counts the number of items of teaching data used in multi-class supervised learning for each class, and the number of items of teacher data is adjusted for each class based on a difference between the counted number of items of data and a predetermined reference value. Further, the device generates a discrimination model based on the teaching data that has had its number of data items adjusted.

### Prior Art Documents

### Patent Literatures

Patent Literature 1: Japanese Patent Application Laid-open No. 2021-047826
Patent Literature 2: Japanese National Phase Publication No. 2020-531933
Patent Literature 3: Japanese Patent Application Laid-open No. 2010-204966

### SUMMARY OF INVENTION

### Technical Problem

### Problem to be Solved by the Invention

Methods to correct imbalances in training data include methods of correcting imbalances between classes to which data labels belong, and methods of correcting imbalances between groups in cases in which data is classified by specific attributes. In a case in which training data contains a mixture of class imbalance and group imbalance, it may be conceivable to apply a combination of these methods. However, in a case in which these methods are simply combined, there are cases in which excessive fairness enhancement or biased fairness enhancement is performed.

As one aspect, the technique of the disclosure aims to suppress excessive fairness enhancement or biased fairness enhancement in a case in which a combination of data correction processes for correcting imbalances in training data is applied.

### Solution to Problem

As one aspect, the technique of the disclosure receives a designation of plural data correction processes to be applied in sequence to first training data. Further, the technique of the disclosure determines a degree of correction of data to be performed by each of the plural data correction processes based on a combination of the plural data correction processes. Further, the technique of the disclosure applies the plural data correction processes to the first training data in order based on the degree of correction and generates corrected second training data.

### Advantageous Effects of Invention

As one aspect, the effect is achieved of being able to suppress excessive fairness enhancement or biased fairness enhancement in a case of application of a combination of data correction processes for correcting imbalances in training data.

### BRIEF DESCRIPTION OF DRAWINGS

Fig. 1 is a diagram for explaining an imbalance in training data.
Fig. 2 is a diagram for explaining relabeling, which is an example of data correction processing.
Fig. 3 is a diagram for explaining oversampling, which is an example of data correction processing.
Fig. 4 is a diagram for explaining a problem with oversampling.
Fig. 5 is a diagram illustrating a simple method for combining methods of data correction processing.
Fig. 6 is a diagram illustrating a simple method for combining method of data correction processing.
Fig. 7 is a diagram illustrating a simple method for combining method of data correction processing.
Fig. 8 is a diagram for explaining fairness enhancement strength.
Fig. 9 is a diagram for explaining the fairness enhancement progress rate.
Fig. 10 is a functional block diagram of a training data generation device according to a first embodiment.
Fig. 11 is a diagram for explaining data correction processing combining plural methods.
Fig. 12 is a diagram illustrating an example of a method for determining fairness enhancement strength in the first embodiment.
Fig. 13 is a block diagram showing a schematic configuration of a computer that functions as a training data generation device.
Fig. 14 is a flowchart illustrating an example of training data generation processing.
Fig. 15 is a functional block diagram of a training data generation device according to a second embodiment.
Fig. 16 is a diagram for explaining variable types that affect input and output for each method.
Fig. 17 is a diagram that illustrates an example of a variable type DB.
Fig. 18 is a diagram illustrating an example of a method for determining fairness enhancement strength in the second embodiment.

### DESCRIPTION OF EMBODIMENTS

Explanation follows regarding an example of an embodiment of the technique of the disclosure, with reference to the drawings.

Before describing the details of the embodiment, the significance of, and problems in, combining and applying data correction processing to correct imbalances in training data are explained.

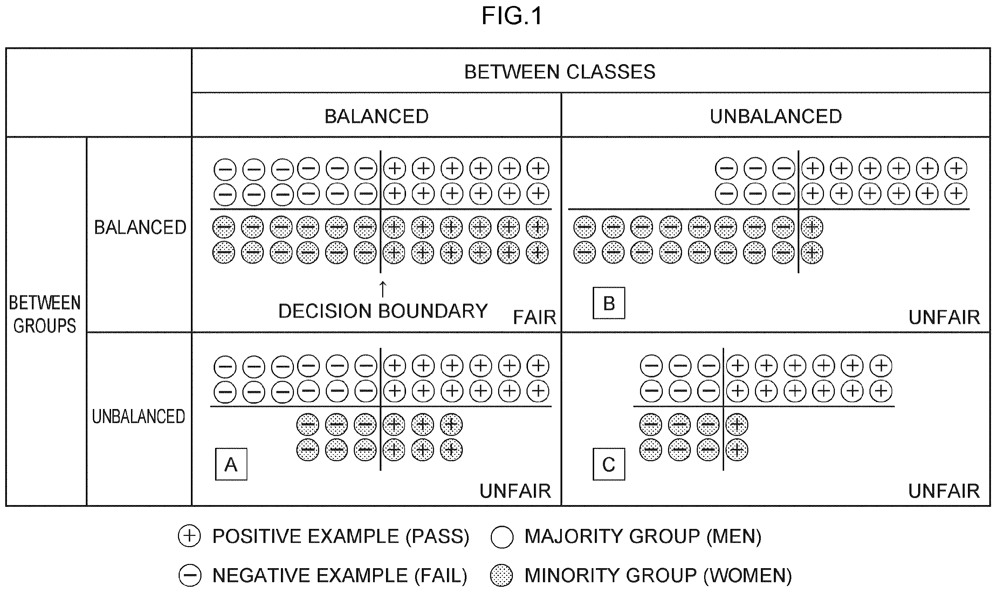

As shown in Fig. 1, imbalances in training data includes imbalances between classes to which the labels of the data belong, and imbalances between groups in cases in which the data is classified by a specific attribute. In the example of Fig. 1, each circle represents one item of data, with a "+" representing a positive example (e.g., a "pass") and a "-" representing a negative example (e.g., a "fail"). In addition, a positive example is, for example, data in which an attribute corresponding to a target variable of a binary classification has one of the values, and in contrast, a negative example is, for example, data in which the attribute has the other value. Further, the white circles represent a majority group (for example, the attribute "gender" is "male"), and the shaded circles represent a minority group (for example, the attribute "gender" is "female"). Further, in Fig. 1, the data are arranged from the right in order of likelihood as a positive example, and from the left in order of likelihood as a negative example. That is, the closer a positive example is to a decision boundary, which is the boundary between positive examples and negative examples, the lower the likelihood of it being a positive example, and the closer a negative example is to the decision boundary, the less likely it is to be a negative example. The data notation method is the same in each of the following drawings.

There are three types of cases in which unfairness occurs in training data, as shown in A, B, and C in Fig. 1. A is a case that is balanced between classes but is imbalanced between groups; that is, a case in which the proportion of positive examples to negative examples is substantially equal between groups, but the number of data items in the minority group is smaller than the number of data items in the majority group. In this case, the lack of data on the minority group leads to learning deficiency, and unfairness occurs in the accuracy of machine learning models between minority group and the majority group. B is a case that is balanced between groups but is imbalanced between classes; that is, a case in which the number of data items in each group is substantially equal, but the positive example rate of the minority group is lower than the positive example rate of the majority group. In this case, machine learning models are generated that are trained with many features that are disadvantageous to the minority group, and unfairness occurs in the positive example rates of the majority group and the minority group in the prediction results of the machine learning model. C is a case in which imbalances occur both between groups and between classes. In this case, unfairness occurs in terms of both the accuracy and the positive example rate described above.

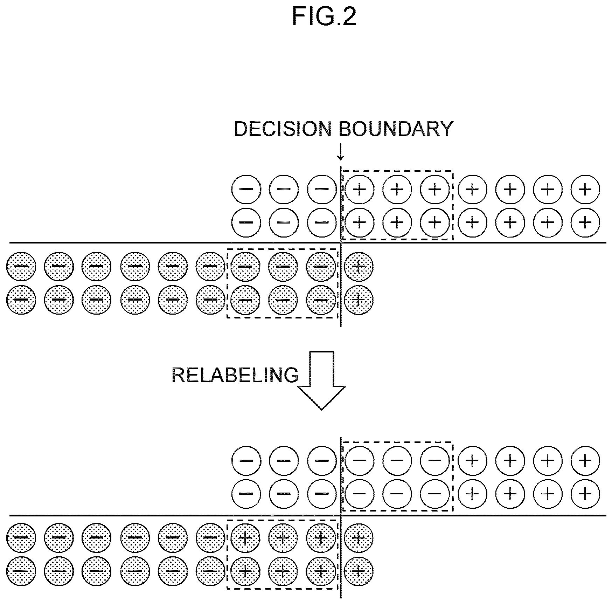

One example of a data correction processing method for equalizing the proportions of classes, that is, the proportions of positive and negative examples, between groups, is the relabeling method. Relabeling is a method in which, as shown in Fig. 2, for example, by inverting the labels of the positive examples in the majority group and the negative examples in the minority group near the decision boundary (the dashed lines in Fig. 2), the ratio of positive examples to negative examples is made substantially equal between groups. Fig. 2 shows an example in which data that was imbalanced between classes results in positive examples:negative examples = 4:6 in both groups through relabeling. However, relabeling cannot handle cases in which the ratio of positive examples to negative examples is already equal and an imbalance occurs in the number of data items between groups, as shown in A of Fig. 1.

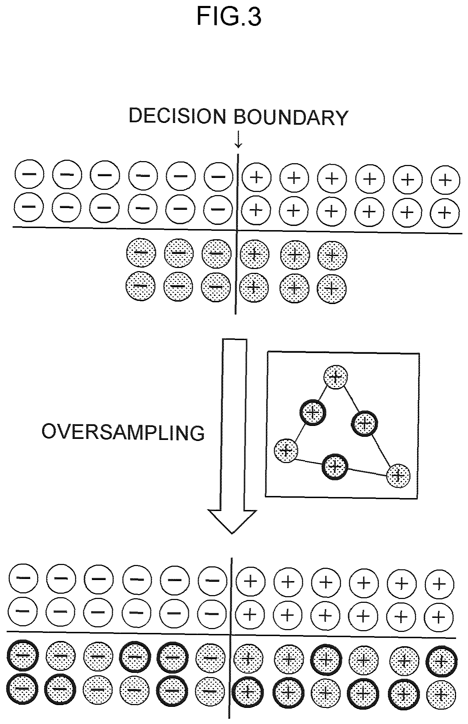

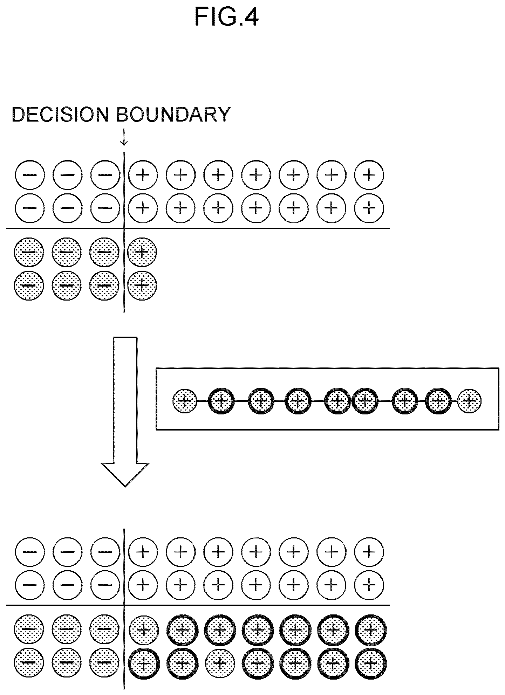

An example of data correction processing method for making the number of data items equal between groups is the oversampling method. Oversampling is, as shown in Fig. 3, for example, a method that treats combinations of groups and classes as clusters, and generates data for other clusters so that they become equal in size to the largest cluster. In oversampling, data is generated that fills in gaps between adjacent data in existing data, for example. Fig. 3 shows an example in which three new positive example data (the bold line circles in Fig. 3) are generated from three positive example data. As a result, the scale of positive and negative examples becomes equal across groups, and learning deficiency for a minority group does not occur. However, in oversampling, when generating a large amount of new data from a small amount of existing data, as shown in Fig. 4, since a large amount of data having similar characteristics is generated, overfitting tends to occur.

The above-described data correction processing concerns methods for correcting data by focusing on a response variable (class) of the training data; however, a method for correcting explanatory variables also exists. While a method of correcting explanatory variables does not correct imbalances between classes or groups, a machine learning model trained using a revised training dataset can be improved to enable balanced predictions. One method for correcting explanatory variables is, for example, the reweighting method. Reweighting is a method that adds a weighting variable to each data item such that data in an unbalanced cluster has a higher value. As a result, data belonging to small clusters is trained to the same extent as other clusters, alleviating imbalances between groups. However, similarly to the oversampling described above, there are cases in which reweighting causes overfitting with respect to imbalances between classes. Further, as a method for correcting explanatory variables, for example, there is the disparate impact remover (DIR) method. DIR is a method for rewriting values so that explanatory variables are distributed similarly between groups, which can alleviate imbalances between classes. However, similarly to the relabeling described above, DIR cannot alleviate imbalances between groups.

In this way, in cases in which either the classes or groups are imbalanced in the training dataset, it is necessary to select an appropriate method to perform data correction processing. Further, in cases in which both classes and groups are imbalanced, simply applying a single method cannot adequately remedy the imbalance in the training dataset. In addition, cases in which both classes and groups are imbalanced include cases in which "both groups are imbalanced" and cases in which "one group is imbalanced between classes and another group is imbalanced between groups".

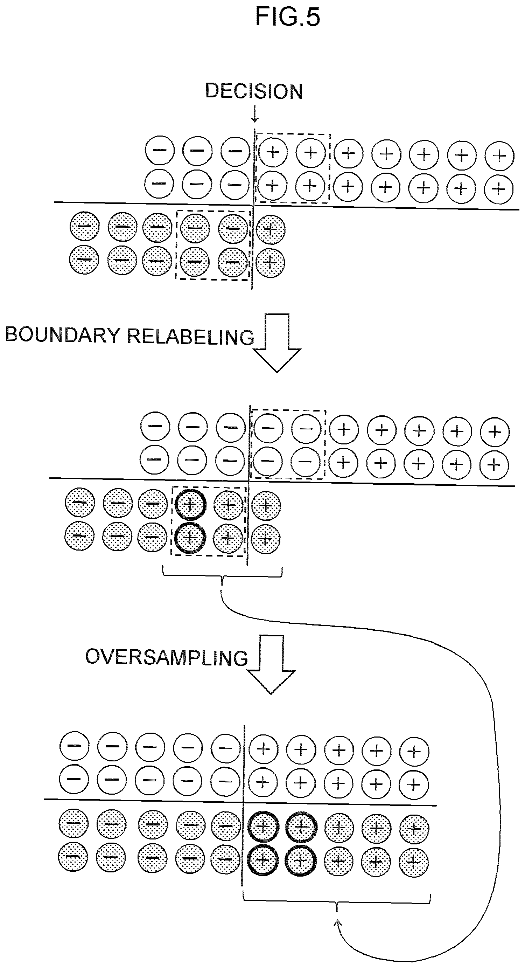

In order to solve the problems described above, it is conceivable to combine plural methods for data correction processing. For example, as shown in Fig. 5, a case is conceivable in which relabeling is applied to the data in the dashed line portion, and then oversampling is applied. However, in a case in which relabeling and oversampling are simply combined to correct data, this results in much data being generated that has the opposite characteristics to the label. For example, in Fig. 5, although the label is a positive example, much data having the characteristics of a negative example is generated. In particular, while data far from the decision boundary (the bold line circles in the middle of Fig. 5) is data having strong negative example characteristics, these data are used to expand the positive example data. Machine learning models that are trained using data with strong negative example characteristics as positive examples are more likely to have reduced accuracy and reduced fairness and, in particular, to cause reverse discrimination. Reverse discrimination is a situation in which a minority group is given preferential treatment, and in the example of Fig. 5, in the case of minority group data, even data that has strong characteristics as negative examples is predicted as positive examples.

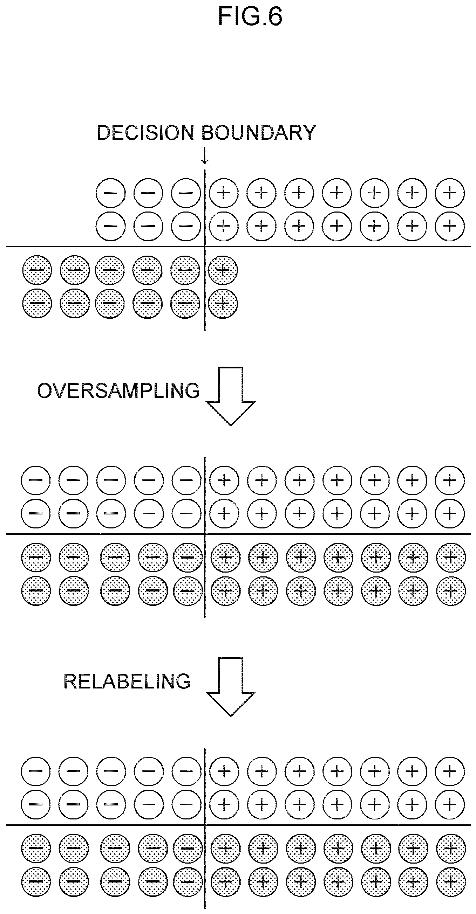

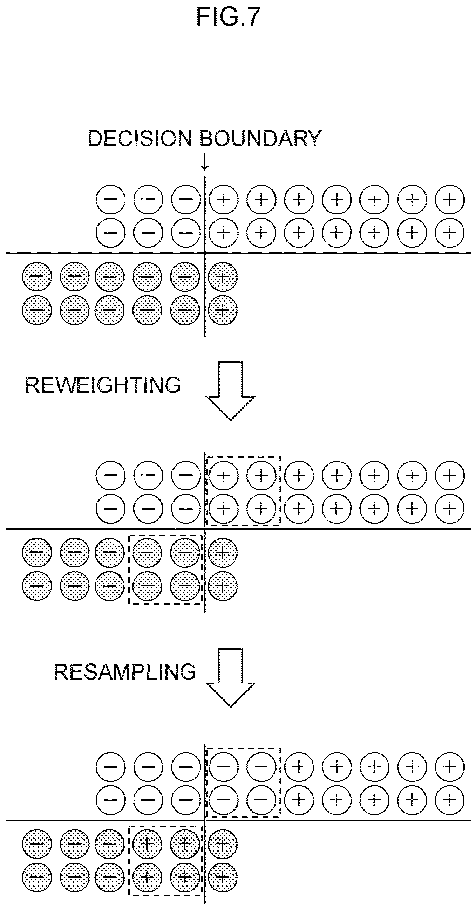

Further, for example, as shown in Fig. 6, a case is conceivable in which oversampling is first applied and then relabeling is applied. However, in this case, since classes are already balanced at the stage of applying relabeling, data correction by relabeling does not function. Further, as shown in Fig. 7, for example, a case is conceivable in which relabeling is applied after applying reweighting. Reweighting is a method of modifying explanatory variables, and while the classes of the data are not particularly corrected in the middle diagram of Fig. 7, by modifying the values of the explanatory variables in the data in the dashed line portions, the distribution of the explanatory variables is balanced, and a situation in which fairness is satisfied between classes is achieved. In this way, in a situation in which fairness is satisfied between classes by reweighting, a case in which relabeling is used to make the classes, which are the response variables, fair in addition to the explanatory variables would result in excessive fairness enhancement.

As described above, by simply combining data correction processing methods, there are cases in which the combined effect is excessive, or in which the effect of the initial method is dominant, and in either case, there are cases in which the predictive accuracy of the machine learning model and the fairness of the prediction results are diminished. Therefore, in the respective embodiments below, for each data correction processing method in a case in which plural data correction processes are applied sequentially to a training data set, the concepts of fairness enhancement strength and fairness enhancement progress rate are introduced to suppress excessive fairness enhancement resulting from the combination and fairness enhancement biased towards a specific method. As a result, in each embodiment, the effect of the data correction processing using the respective methods is appropriately obtained.

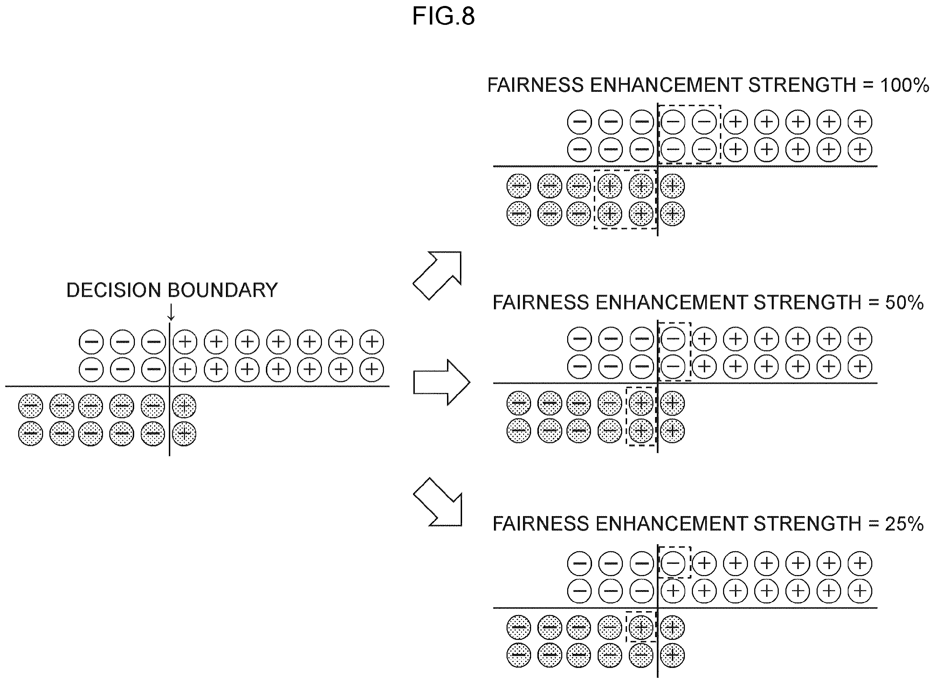

The fairness enhancement strength is an index indicating the extent to which fairness enhancement is to be performed in one data correction process. Specifically, the percentage is set to 100% in a case in which data processing according to the given method is used to completely balance classes or groups, and based on this standard, the percentage of fairness enhancement achieved is defined as the fairness enhancement strength. For example, in the case of relabeling, as shown in Fig. 8, in order to completely balance the classes, it is necessary to invert the labels of four items of positive example data from the majority group and four items of negative example data from the minority group. The state after label inversion is set as fairness enhancement strength = 100%. In this case, in a case in which the labels of two items of positive example data in the majority group and two items of negative example data in the minority group are inverted, for example, the fairness enhancement strength = 50%. Further, in a case in which the labels of one item of positive example data in the majority group and one item of negative example data in the minority group are inverted, for example, the fairness enhancement strength = 25%.

The fairness enhancement progress rate is an indicator that measures the effect of each method. The fairness enhancement progress rate increases by applying plural methods, with 0% being an initial state and 100% being the fairest state. Further, the fairness enhancement progress rate obtained by each method is defined as a progress rate difference. That is, the sum of the progress rate differences of the methods that have already been applied is the fairness enhancement progress rate at that stage. For the first method, the fairness enhancement strength of the method = the progress rate difference. For the second and subsequent methods, the remaining fairness enhancement progress rate (1-fairness enhancement progress rate) x the fairness enhancement strength = the progress rate difference. When a fairness enhancement strength of 100% is applied using any of the methods, the fairness enhancement progress rate also becomes 100%, and thereafter, the fairness enhancement progress rate does not increase.

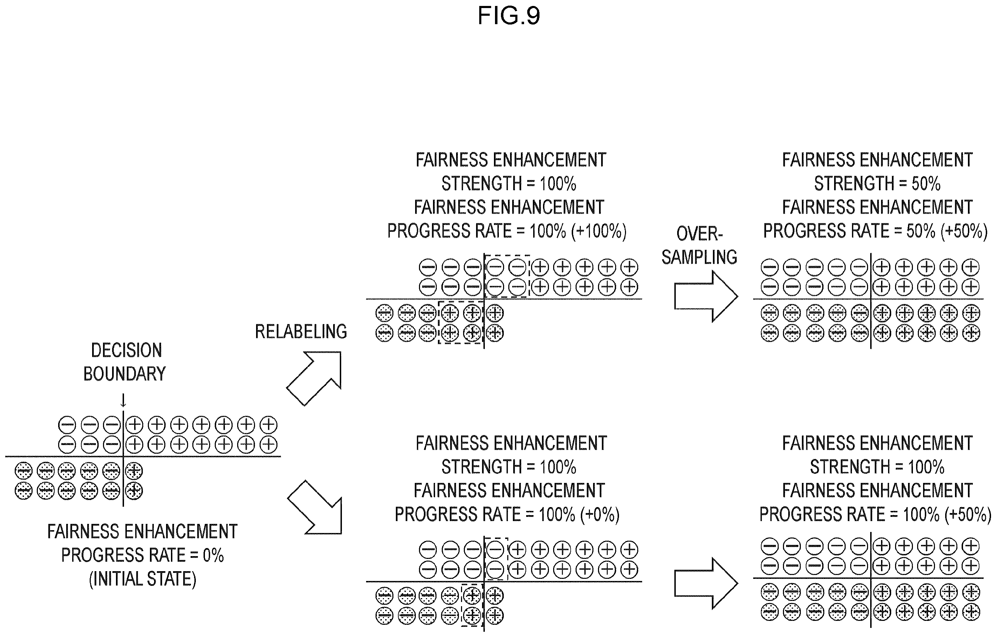

Fig. 9 shows an example of a case in which relabeling is applied as the first method and oversampling is applied as the second method. In the initial state, the fairness enhancement progress rate is 0%. In a case in which relabeling is applied with fairness enhancement strength = 100%, the relabeling progress rate difference is 100%, and the fairness enhancement progress rate at this stage is also 100%. Accordingly, even if oversampling with fairness enhancement strength = 100% were then applied, since the fairness enhancement progress rate has already reached 100%, the progress rate difference is 0%. That is, the oversampling has no effect. Further, in a case in which relabeling is applied with fairness enhancement strength = 50%, the relabeling progress rate difference is 50%, and the fairness enhancement progress rate at this stage is also 50%. Next, in a case in which oversampling is applied with fairness enhancement strength = 100%, the fairness enhancement progress rate reaches 100%, and the oversampling progress rate difference is 50%. In Fig. 9, the percentages appended in parentheses following the fairness enhancement progress rates indicate the progress rate differences of the respective methods.

Accordingly, by determining the fairness enhancement strength of each method such that the progress rate difference of each method is an appropriate ratio with respect to the fairness enhancement progress rate that is the ultimate objective, the effects of each method can be appropriately obtained. In the present embodiment, based on the foregoing considerations, the fairness enhancement strength of each method is determined. A training data generation device according to respective embodiments is described in detail below.

### First Exemplary Embodiment

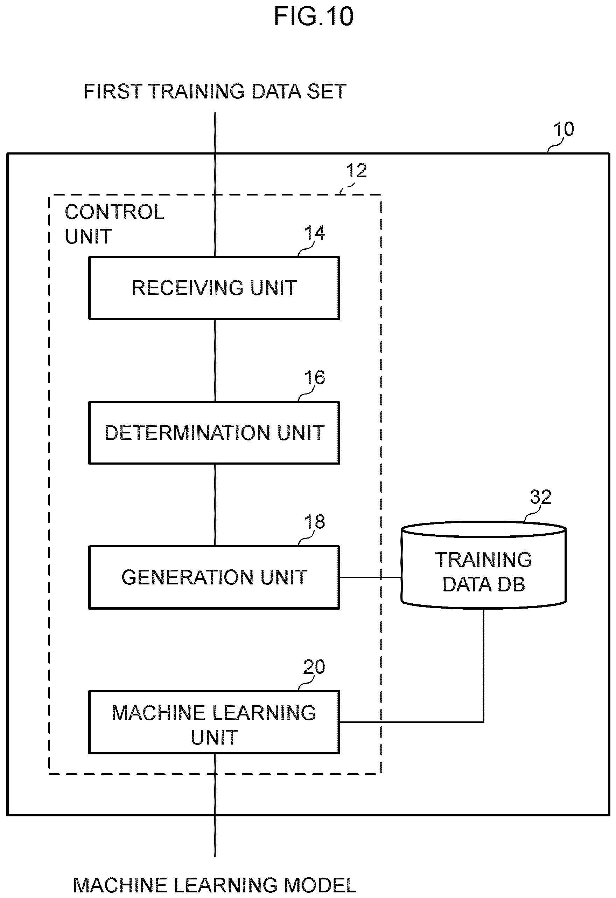

As shown in Fig. 10, a training data generation device 10 according to a first embodiment functionally includes a control unit 12. The control unit 12 further includes a receiving unt 14, a determination unit 16, a generation unit 18, and a machine learning unit 20. Further, a training data database (DB) 32 is stored in a predetermined storage area of the training data generation device 10.

The receiving unit 14 receives a first training data set. The first training data set is an aggregate of first training data that includes values of plural attributes, and is a training dataset with a fairness enhancement progress rate of 0%. The plural attributes include a response variable that represents one of plural classes, and an explanatory variables. The explanatory variables include sensitive attributes such as gender and nationality that may be subject to discriminatory treatment, and other non-sensitive attributes.

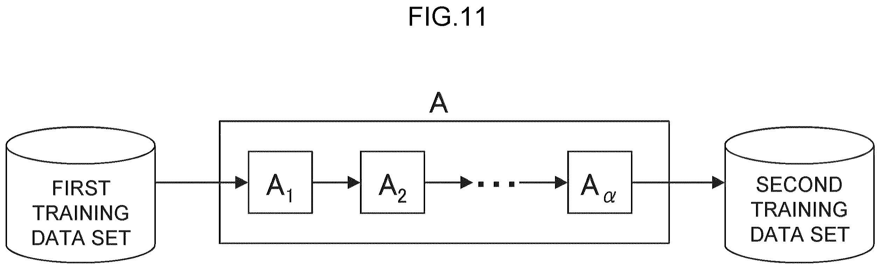

Further, the receiving unit 14 receives designation of plural data correction processing methods to be applied in sequence to the first training data. In a case of applying data correction processing A to the first training data set and generating a second training data set, as shown in Fig. 11, A is represented as [A₁, A₂, ..., A_{α}]. Aᵢ (i=1, 2, ..., α) represents the respective methods applied to the first training data set, i represents the order in which each method is applied to the first training data, and α (α>1) represents the number of methods.

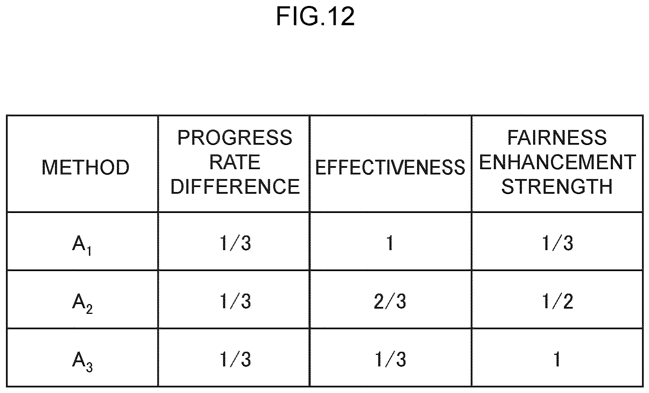

The determination unit 16 determines the degree of data correction performed by each of the plural data correction processes-that is, the fairness enhancement strength of each method-based on a combination of the plural data correction processes. Specifically, the determination unit 16 sets the progress rate difference of each method so that the sum of the progress rate differences of the respective methods corresponds to the fairness enhancement progress rate to be ultimately reached. For example, in a case in which the determination unit 16, with three methods (α=3) applied, sets the ultimate fairness enhancement progress rate to 100% and sets the progress rate difference of each method to be equal, as shown in Fig. 12, the progress rate difference of each method (A₁, A₂, and A₃) is set to 1/3. In addition, the progress rate difference of each method is not limited to a case of being equal, and different values may be set in consideration of the influence of the respective methods. Further, the ultimate fairness enhancement progress rate is not limited to a case of being set at 100%. For example, a case might be supposed in which the fairness enhancement progress rate is 80%, and the influence of the methods A₁, A₂, and A₃ is to be 50%, 25%, and 25%, respectively. In this case, the determination unit 16 sets the progress rate difference of method A₁, A₂, and A₃ to 40%, 20%, and 20%, respectively.

The later a method is applied in the data correction processing, the less effective it becomes. Therefore, the determination unit 16 calculates the effectiveness of the data correction processing for each method, which decreases the later in the order that the method is applied to the first training data set. For example, as shown in Fig. 12, the determination unit 16 calculates the effectiveness of each method using (1 - the sum of the progress rate differences of the methods prior to the method concerned). Further, the determination unit 16 determines the fairness enhancement strength of each method such that the lower the effectiveness, the stronger the strength is made, thereby increasing the influence. For example, as shown in Fig. 12, the determination unit 16 determines a value obtained by dividing the progress rate difference of each method by the effectiveness as the fairness enhancement strength of each method.

Based on the fairness enhancement strength of each method as determined by the determination unit 16, the generation unit 18 applies the data correction processing according to each method to the first training data in order and generates corrected second training data. The generation unit 18 stores a second training data set, which is an aggregate of second training data, in the training data DB 32.

The machine learning unit 20 trains the machine learning model using the second training data set stored in the training data DB 32.

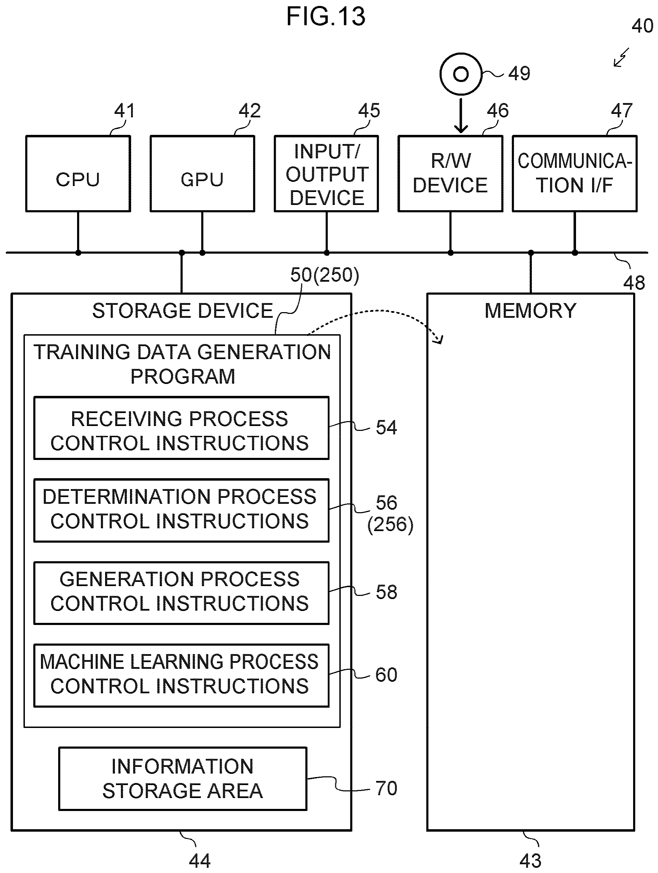

The training data generation device 10 according to the first embodiment may be realized by, for example, the computer 40 shown in Fig. 13. The computer 40 includes a central processing unit (CPU) 41, a graphics processing unit (GPU) 42, a memory 43 as a temporary storage area, and a non-volatile storage device 44. Further, the computer 40 includes an input/output device 45 such as an input device and a display device, and a read/write (R/W) device 46 that controls reading and writing of data from and to a storage medium 49. Further, the computer 40 includes a communication interface (I/F) 47 that is connected to a network such as the Internet. The CPU 41, the GPU 42, the memory 43, the storage device 44, the input/output device 45, the R/W device 46, and the communication I/F 47 are connected to one another via a bus 48.

The storage device 44 is, for example, a hard disk drive (HDD), a solid state drive (SSD), or a flash memory. The storage device 44, as a storage medium, stores a training data generation program 50 for causing the computer 40 to function as the training data generation device 10. The training data generation program 50 includes receiving process control instructions 54, determination process control instructions 56, generation process control instructions 58, and machine learning process control instructions 60. Further, the storage device 44 has an information storage area 70 in which information configuring the training data DB 32 is stored.

The CPU 41 reads the training data generation program 50 from the storage device 44, loads it into the memory 43, and sequentially executes the control instructions contained in the training data generation program 50. The CPU 41 executes the receiving process control instructions 54 to operate as the receiving unit 14 shown in Fig. 10. Further, the CPU 41 executes the determination process control instructions 56 to operate as the determination unit 16 shown in Fig. 10. Further, the CPU 41 executes the generation process control instructions 58 to operate as the generation unit 18 shown in Fig. 10. Further, the CPU 41 executes the machine learning process control instructions 60 to operate as the machine learning unit 20 shown in Fig. 10. Further, the CPU 41 reads information from the information storage area 70 and loads the training data DB 32 into the memory 43. As a result, the computer 40 executing the training data generation program 50 functions as the training data generation device 10. The CPU 41 that executes the program is hardware. Further, a portion of the program may be executed by the GPU 42.

The functions realized by the training data generation program 50 may be realized, for example, by a semiconductor integrated circuit, more specifically, an application specific integrated circuit (ASIC), a field-programmable gate array (FPGA), or the like.

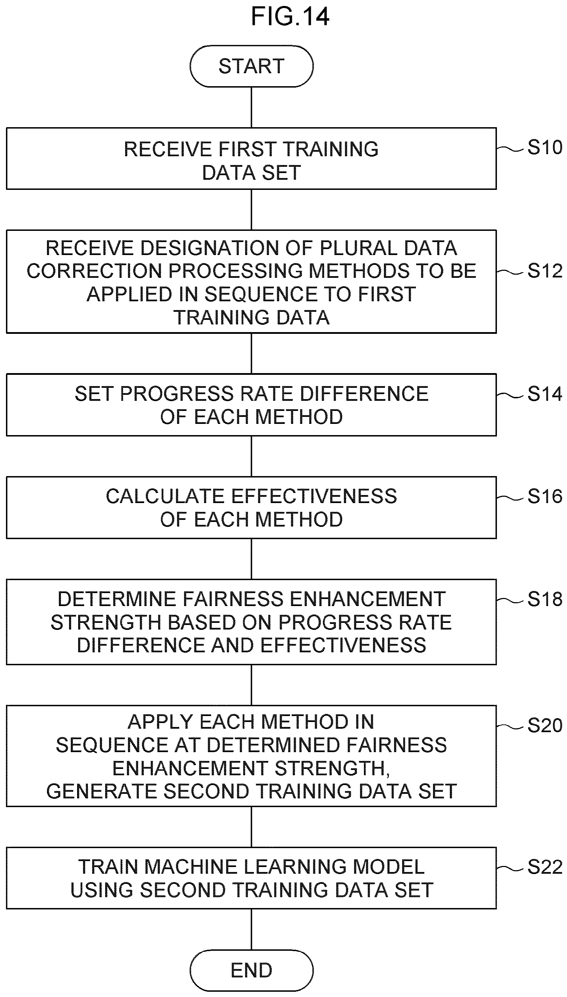

Next, the operation of the training data generation device 10 according to the first embodiment is explained. When the first training data set is input to the training data generation device 10 and an instruction is given to generate a second training data set and to train a machine learning model, the training data generation process shown in Fig. 14 is executed in the training data generation device 10. The training data generation process is an example of a training data generation method of the technique of the disclosure.

In step S10, the receiving unit 14 receives the first training data set input to the training data generation device 10. Next, in step S12, the receiving unit 14 receives designation of plural data correction processing methods to be applied in sequence to the first training data. Next, in step S14, the determination unit 16 sets the progress rate difference of each method so that the sum of the progress rate differences of the respective methods corresponds to the fairness enhancement progress rate that should be ultimately reached. Next, in step S16, the determination unit 16 calculates the effectiveness of the data correction processing for each method, which decreases the later in the order that the method is applied to the first training data set. Next, in step S18, the determination unit 16 determines the fairness enhancement strength of each method based on the progress rate difference and the effectiveness, such that the influence is increased by increasing the strength the lower the effectiveness is.

Next, in step S20, the generation unit 18 sequentially applies the data correction processing of each method to the first training data based on the fairness enhancement strength of each method determined in the above-described step S18, generates second training data after the correction, and stores the same in the training data DB 32. Next, in step S22, the machine learning unit 20 trains the machine learning model using the second training data set stored in the training data DB 32, and the training data generation processing ends.

As explained above, the training data generation device according to the first embodiment receives designation of plural data correction processes to be applied in sequence to first training data. Further, based on a combination of plural data correction processes, the training data generation device determines the degree of data correction to be performed by each of the plural data correction processes. Further, the training data generation device applies the plural data correction processes to the first training data in order based on the degree of correction and generates corrected second training data. As a result, it is possible to suppress excessive fairness enhancement or biased fairness enhancement in a case of application of a combination of data correction processing for correcting imbalances in training data. Accordingly, second training data is generated with respect to which data correction processing has been performed such that the effects of each method can be appropriately obtained. By training a machine learning model using the second training dataset thus generated, it is possible to suppress reduced accuracy and reduced fairness in machine learning models.

### Second Exemplary Embodiment

A second embodiment is explained next. In a training data generation device according to the second embodiment, the same components as those in the training data generation device 10 according to the first embodiment are denoted by the same reference numerals, and detailed description thereof is omitted.

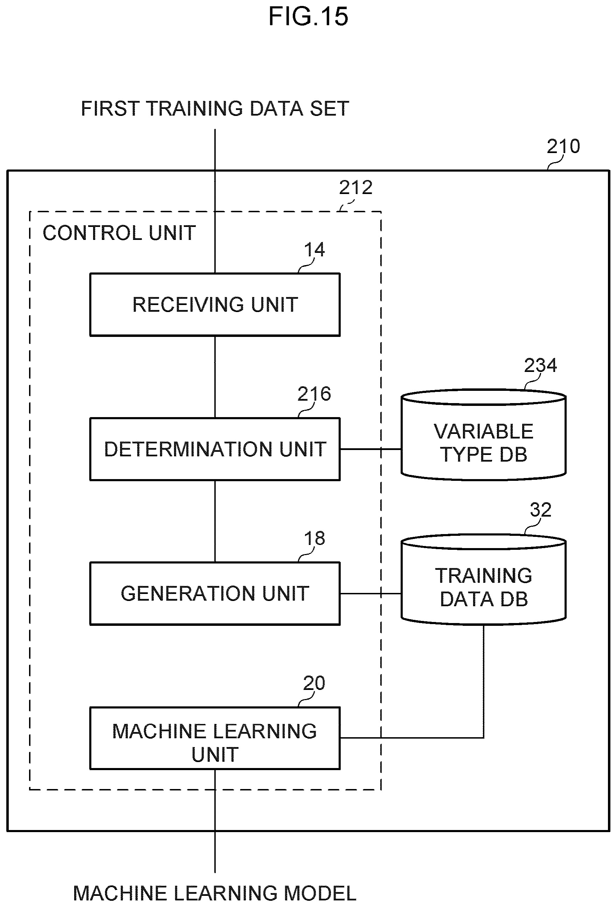

As shown in Fig. 15, a training data generation device 210 according to a second embodiment functionally includes a control unit 212. The control unit 212 further includes a receiving unit 14, a determination unit 216, a generation unit 18, and a machine learning unit 20. Further, in a predetermined storage area of the training data generation device 210, a variable type DB 234 and a training data DB 32 are stored.

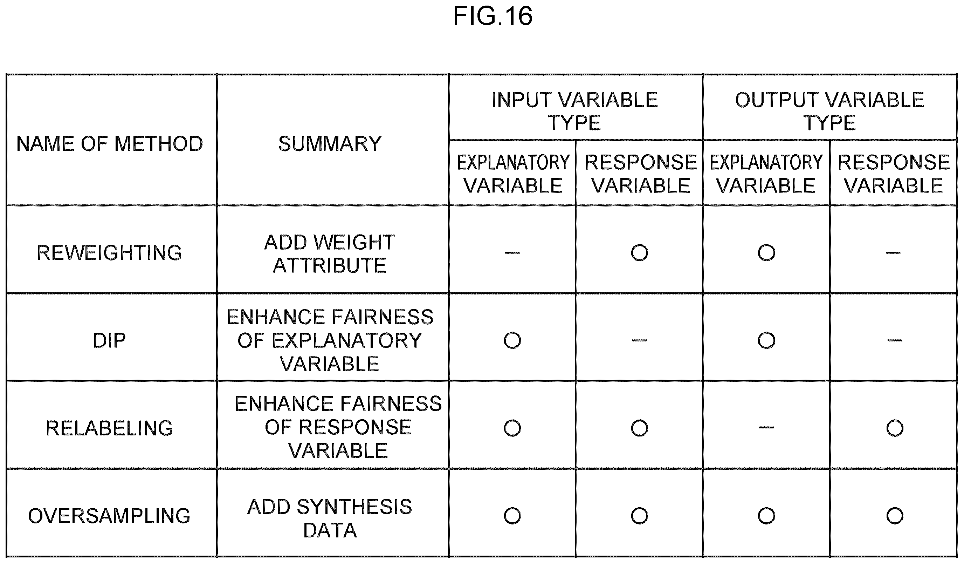

Here, in the fairness enhancement method, which variable type is to be modified among explanatory variables and response variables varies depending on the method, and which variable type to be input also varies depending on the method. The variable type refers to whether the variable is an explanatory variable or a response variable. For example, as shown in Fig. 16, relabeling inputs both explanatory variables and response variables, and outputs only the response variables after enhancing their fairness. If a later-stage method uses the same variable type for output as the output of a previous stage, the effectiveness of the later-stage method will be reduced. For example, a case might be supposed in which oversampling is performed in a prior stage and relabeling is performed in a later stage. In this case, the output of the oversampling is the explanatory variables and the response variables, and the output of the relabeling is the response variables. Accordingly, in the later stage of relabeling, the effect is reduced because the relabeling attempts to enhance the fairness of response variables that have already had their fairness enhanced. However, if different variable types are used for the output in a prior stage and in a later stage, the effectiveness of the method in the later stage is not reduced. For example, a case might be supposed in which DIR is performed in the prior stage and relabeling is performed in the later stage. In this case, the prior DIR outputs explanatory variables, and the later-stage relabeling can obtain a sufficient effect for enhancing the fairness of response variables that remain unbalanced.

Further, the effectiveness of data correction processing is enhanced in a case in which the output variable type used by a prior method becomes the input variable type of a subsequent method. For example, in a case in which the output variable type of a first-stage method is an explanatory variable, the input variable type of the second- or subsequent-stage method is an explanatory variable. This is because, in a case in which the output variable type of the previous method is not used as the input variable type of the next method, there is a possibility that the content of the variable type that has already been corrected will not be utilized, and the effect of the correction will be reduced or eliminated. Accordingly, it is desirable to set the fairness enhancement progress rate and progress rate difference in accordance with the variable types of the input and output of each method.

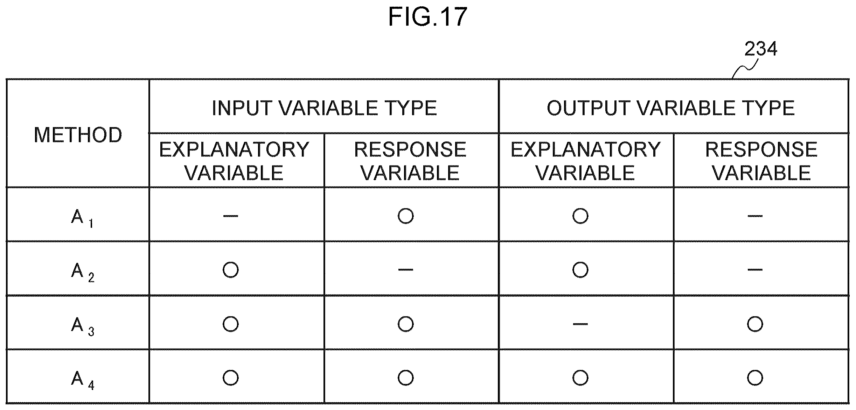

Therefore, in the second embodiment, as shown in Fig. 17, the variable type DB 234 stores, for each method, whether the input variable type and output variable type are explanatory variables or response variables.

The determination unit 216 sets the fairness enhancement progress rate of each method based on the variable type DB 234, in accordance with whether the input variable type and output variable type of each method are explanatory variables or response variables. For example, in a case in which the output variable type of the prior-stage method and the output variable type of the later-stage method match, the determination unit 216 lowers the progress rate difference of the later-stage method as compared to a case in which the variable types do not match (pattern 1). Further, for example, in a case in which the output variable type of the prior-stage method and the input variable type of the later-stage method do not match, the determination unit 216 lowers the progress rate difference of the later-stage method as compared to a case in which the variable types match (pattern 2).

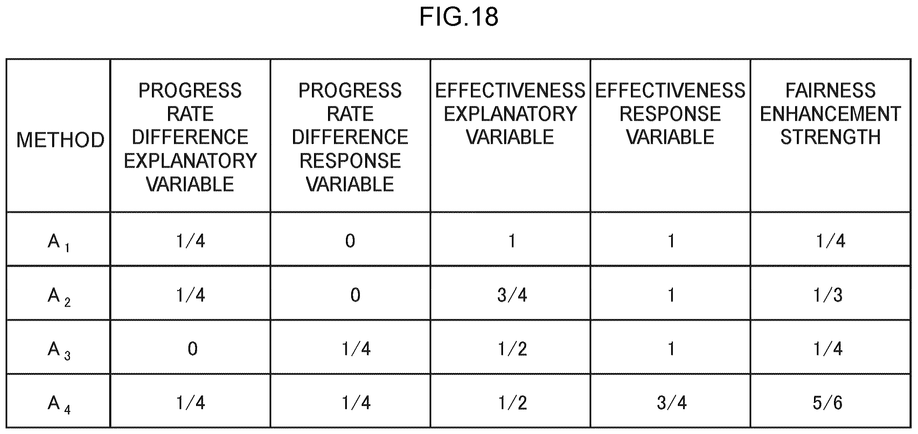

Fig. 18 shows an example of a method for determining the fairness enhancement strength in the case of the above-described pattern 1. In the example of Fig. 18, the determination unit 216 allocates the progress rate difference equally among all the methods, and sets the progress rate difference of a method whose output affects each variable type to 0. Setting the progress rate difference to 0 is an example of lowering the progress rate difference. When the example of the variable type DB 234 in Fig. 17 is used, the output variable type of method A₁, for example, is the explanatory variable. That is, the output of method A₁ affects the explanatory variables and does not affect the response variables. Accordingly, the determination unit 216 sets the progress rate difference for the explanatory variables of method A₁ to 1/4, and the progress rate difference for the response variables to 0.

As shown in Fig. 18, the determination unit 216 also calculates the effectiveness of the data correction processing by each method for each variable type. Further, the determination unit 216 determines the fairness enhancement strength of each method based on the progress rate difference and the effectiveness for each variable type. For example, the determination unit 216 calculates the fairness enhancement strength for each variable type, and determines the sum of these as the ultimate fairness enhancement strength.

The training data generation device 210 according to the second embodiment may be realized by, for example, the computer 40 shown in Fig. 13. The storage device 44 of the computer 40 stores a training data generation program 250 for causing the computer 40 to function as the training data generation device 210. The training data generation program 250 includes receiving process control instructions 54, determination process control instructions 256, generation process control instructions 58, and machine learning process control instructions 60. Further, the storage device 44 has an information storage area 70 in which information configuring the training data DB 32 is stored.

The CPU 41 reads the training data generation program 250 from the storage device 44, loads it into the memory 43, and sequentially executes the control instructions contained in the training data generation program 50. The CPU 41 executes the determination process control instructions 256 to operate as the determination unit 216 shown in Fig. 15. Other control instructions are similar to those of the training data generation program 50 according to the first embodiment. As a result, the computer 40 executing the training data generation program 250 functions as the training data generation device 210.

The functions realized by the training data generation program 250 may be realized by, for example, a semiconductor integrated circuit; more specifically, an ASIC, an FPGA, or the like.

The operation of the training data generation device 210 according to the second embodiment is explained. In the second embodiment, too, the training data generation device 210 executes the training data generation processing shown in Fig. 14. In the second embodiment, the training data generation processing differs from that in the first embodiment in that the processes in S14 to S18 are performed with reference to the variable type DB 234.

As explained above, the training data generation device according to the second embodiment sets the progress rate difference for each method in accordance with the variable types that affect the input and output of the method to be applied. As a result, a more effective fairness enhancement strength can be determined for each method.

In each of the above-described embodiments, the training data generation program is stored in advance (installed) in the storage device; however, there is no limitation to this. The program according to the technique of the disclosure may be provided in a form stored on a storage medium such as a CD-ROM, a DVD-ROM, or a USB memory.

The following supplementary notes are further disclosed regarding the foregoing embodiment.

### (Supplementary Note 1)

A training data generation program that causes a computer to execute processing including:
receiving a designation of plural data correction processes to be applied in sequence to first training data;
determining a degree of correction of data to be performed by each of the plural data correction processes based on a combination of the plural data correction processes; and
based on the degree of correction, applying the plural data correction processes to the first training data in sequence and generating corrected second training data.

### (Supplementary Note 2)

The training data generation program of supplementary note 1, in which processing that determines the degree of correction includes determining the degree of correction based on an effectiveness of the data correction processes, which decreases as an order of application to the first training data becomes later, and on a rate of progress of a degree of correction that should be reached after the data correction processes, which is set for each of the data correction processes.

### (Supplementary Note 3)

The training data generation program of supplementary note 2, in which the rate of progress of the degree of correction that should be reached after the data correction processes is set to a degree of correction that should ultimately be reached in a case in which the rate of progress of each of the data correction processes is added together.

### (Supplementary Note 4)

The training data generation program of supplementary note 2 or supplementary note 3, in which the processing that determines the degree of correction includes determining a value attained by dividing the rate of progress by the effectiveness as the degree of correction.

### (Supplementary Note 5)

The training data generation program of any one of supplementary notes 2 to 4, in which the processing that determines the degree of correction includes setting the rate of progress of the degree of correction that should be reached after the data correction processes in accordance with whether a variable type of each of input and output of the data correction processes is an explanatory variable or a response variable.

### (Supplementary Note 6)

The training data generation program of any one of supplementary notes 2 to 5, in which the processing that determines the degree of correction includes, in a case in which a variable type of an output of a data correction process applied in a prior stage and a variable type of an output of a data correction process applied in a later stage match, reducing the rate of progress of the data correction process applied in the later stage compared to a case in which the variable types do not match.

### (Supplementary Note 7)

The training data generation program of any one of supplementary notes 2 to 5, in which the processing that determines the degree of correction includes, in a case in which a variable type of an output of a data correction process applied in a prior stage and a variable type of an input of a data correction process applied in a later stage do not match, reducing the rate of progress of the data correction process applied in the later stage compared to a case in which the variable types match.

### (Supplementary Note 8)

The training data generation program of any one of supplementary notes 1 to 7, the processing further including training a machine learning model using the second training data.

### (Supplementary Note 9)

A method of generating training data that causes a computer to execute processing including:
receiving a designation of plural data correction processes to be applied in sequence to first training data;
determining a degree of correction of data to be performed by each of the plural data correction processes based on a combination of the plural data correction processes; and
based on the degree of correction, applying the plural data correction processes to the first training data in sequence and generating corrected second training data.

### (Supplementary Note 10)

The method of generating training data of supplementary note 9, in which processing that determines the degree of correction includes determining the degree of correction based on an effectiveness of the data correction processes, which decreases as an order of application to the first training data becomes later, and on a rate of progress of a degree of correction that should be reached after the data correction processes, which is set for each of the data correction processes.

### (Supplementary Note 11)

The method of generating training data of supplementary note 10, in which the rate of progress of the degree of correction that should be reached after the data correction processes is set to a degree of correction that should ultimately be reached in a case in which the rate of progress of each of the data correction processes is added together.

### (Supplementary Note 12)

The method of generating training data of supplementary note 10 or supplementary note 11, in which the processing that determines the degree of correction includes determining a value attained by dividing the rate of progress by the effectiveness as the degree of correction.

### (Supplementary Note 13)

The method of generating training data of any one of supplementary notes 10 to 12, in which the processing that determines the degree of correction includes setting the rate of progress of the degree of correction that should be reached after the data correction processes in accordance with whether a variable type of each of input and output of the data correction processes is an explanatory variable or a response variable.

### (Supplementary Note 14)

The method of generating training data of any one of supplementary notes 10 to 13, in which the processing that determines the degree of correction includes, in a case in which a variable type of an output of a data correction process applied in a prior stage and a variable type of an output of a data correction process applied in a later stage match, reducing the rate of progress of the data correction process applied in the later stage compared to a case in which the variable types do not match.

### (Supplementary Note 15)

The method of generating training data of any one of supplementary notes 10 to 13, in which the processing that determines the degree of correction includes, in a case in which a variable type of an output of a data correction process applied in a prior stage and a variable type of an input of a data correction process applied in a later stage do not match, reducing the rate of progress of the data correction process applied in the later stage compared to a case in which the variable types match.

### (Supplementary Note 16)

The method of generating training data of any one of supplementary notes 9 to 15, the processing further including training a machine learning model using the second training data.

### (Supplementary Note 17)

A training data generation device, including a control unit that executes processing including:
receiving a designation of plural data correction processes to be applied in sequence to first training data;
determining a degree of correction of data to be performed by each of the plural data correction processes based on a combination of the plural data correction processes; and
based on the degree of correction, applying the plural data correction processes to the first training data in sequence and generating corrected second training data.

### (Supplementary Note 18)

The training data generation device of supplementary note 17, in which processing that determines the degree of correction includes determining the degree of correction based on an effectiveness of the data correction processes, which decreases as an order of application to the first training data becomes later, and on a rate of progress of a degree of correction that should be reached after the data correction processes, which is set for each of the data correction processes.

### (Supplementary Note 19)

The training data generation device of supplementary note 18, in which the rate of progress of the degree of correction that should be reached after the data correction processes is set to a degree of correction that should ultimately be reached in a case in which the rate of progress of each of the data correction processes is added together.

### (Supplementary Note 20)

The training data generation device of supplementary note 18 or supplementary note 19, in which the processing that determines the degree of correction includes determining a value attained by dividing the rate of progress by the effectiveness as the degree of correction. Description of Reference Numerals
- 10, 210: Training data generation device
- 12, 212: Control unit
- 14: Receiving unit
- 16, 216: Determination unit
- 18: Generation unit
- 20: Machine learning unit
- 32: Training data DB
- 234: Variable type DB
- 40: Computer
- 41: CPU
- 42: GPU
- 43: Memory
- 44: Storage device
- 45: Input/output device
- 46: R/W device
- 47: Communication I/F
- 48: Bus
- 49: Storage medium
- 50, 250: Training data generation program
- 54: Receiving process control instructions
- 56, 256: Determination process control instructions
- 58: Generation process control instructions
- 60: Machine learning process control instructions
- 70: Information storage area

## Claims

1. A training data generation program executable by a computer to perform a process, the process comprising:
receiving a designation of a plurality of data correction processes to be applied in sequence to first training data;
determining a degree of correction of data to be performed by each of the plurality of data correction processes based on a combination of the plurality of data correction processes; and
based on the degree of correction, applying the plurality of data correction processes to the first training data in sequence and generating corrected second training data.

2. The training data generation program of claim 1, wherein processing that determines the degree of correction comprises determining the degree of correction based on an effectiveness of the data correction processes, which decreases as an order of application to the first training data becomes later, and on a rate of progress of a degree of correction that should be reached after the data correction processes, which is set for each of the data correction processes.

3. The training data generation program of claim 2, wherein the rate of progress of the degree of correction that should be reached after the data correction processes is set to a degree of correction that should ultimately be reached in a case in which the rate of progress of each of the data correction processes is added together.

4. The training data generation program of claim 2 or claim 3, wherein the processing that determines the degree of correction comprises determining a value attained by dividing the rate of progress by the effectiveness as the degree of correction.

5. The training data generation program of any one of claims 2 to 4, wherein the processing that determines the degree of correction comprises setting the rate of progress of the degree of correction that should be reached after the data correction processes in accordance with whether a variable type of each of input and output of the data correction processes is an explanatory variable or a response variable.

6. The training data generation program of any one of claims 2 to 5, wherein the processing that determines the degree of correction comprises, in a case in which a variable type of an output of a data correction process applied in a prior stage and a variable type of an output of a data correction process applied in a later stage match, reducing the rate of progress of the data correction process applied in the later stage compared to a case in which the variable types do not match.

7. The training data generation program of any one of claims 2 to 5, wherein the processing that determines the degree of correction comprises, in a case in which a variable type of an output of a data correction process applied in a prior stage and a variable type of an input of a data correction process applied in a later stage do not match, reducing the rate of progress of the data correction process applied in the later stage compared to a case in which the variable types match.

8. The training data generation program of any one of claims 1 to 7, the processing further comprising training a machine learning model using the second training data.

9. A training data generation method executable by a computer to perform a process, the process comprising:
receiving a designation of a plurality of data correction processes to be applied in sequence to first training data;
determining a degree of correction of data to be performed by each of the plurality of data correction processes based on a combination of the plurality of data correction processes; and
based on the degree of correction, applying the plurality of data correction processes to the first training data in sequence and generating corrected second training data.

10. The training data generation method of claim 9, wherein processing that determines the degree of correction comprises determining the degree of correction based on an effectiveness of the data correction processes, which decreases as an order of application to the first training data becomes later, and on a rate of progress of a degree of correction that should be reached after the data correction processes, which is set for each of the data correction processes.

11. The training data generation method of claim 10, wherein the rate of progress of the degree of correction that should be reached after the data correction processes is set to a degree of correction that should ultimately be reached in a case in which the rate of progress of each of the data correction processes is added together.

12. The training data generation method of claim 10 or claim 11, wherein the processing that determines the degree of correction comprises determining a value attained by dividing the rate of progress by the effectiveness as the degree of correction.

13. The training data generation method of any one of claim 10 to 12, wherein the processing that determines the degree of correction comprises setting the rate of progress of the degree of correction that should be reached after the data correction processes in accordance with whether a variable type of each of input and output of the data correction processes is an explanatory variable or a response variable.

14. The training data generation method of any one of claim 10 to 13, wherein the processing that determines the degree of correction comprises, in a case in which a variable type of an output of a data correction process applied in a prior stage and a variable type of an output of a data correction process applied in a later stage match, reducing the rate of progress of the data correction process applied in the later stage compared to a case in which the variable types do not match.

15. The training data generation method of any one of claim 10 to 13, wherein the processing that determines the degree of correction comprises, in a case in which a variable type of an output of a data correction process applied in a prior stage and a variable type of an input of a data correction process applied in a later stage do not match, reducing the rate of progress of the data correction process applied in the later stage compared to a case in which the variable types match.

16. The training data generation method of any one of claim 9 to 16, the processing further comprising training a machine learning model using the second training data.

17. A training data generation device, comprising a control unit that executes processing comprising:
receiving a designation of a plurality of data correction processes to be applied in sequence to first training data;
determining a degree of correction of data to be performed by each of the plurality of data correction processes based on a combination of the plurality of data correction processes; and
based on the degree of correction, applying the plurality of data correction processes to the first training data in sequence and generating corrected second training data.

18. The training data generation device of claim 17, wherein processing that determines the degree of correction comprises determining the degree of correction based on an effectiveness of the data correction processes, which decreases as an order of application to the first training data becomes later, and on a rate of progress of a degree of correction that should be reached after the data correction processes, which is set for each of the data correction processes.

19. The training data generation device of claim 18, wherein the rate of progress of the degree of correction that should be reached after the data correction processes is set to a degree of correction that should ultimately be reached in a case in which the rate of progress of each of the data correction processes is added together.

20. The training data generation device of claim 18 or 19, wherein the processing that determines the degree of correction comprises determining a value attained by dividing the rate of progress by the effectiveness as the degree of correction.
